# EUROPÄISCHE PATENTANMELDUNG

(11) **EP 1 050 769 A1**
(43) Veröffentlichungstag der Anmeldung: **08.11.2000**
(21) Anmeldenummer: 00108802.0
(22) Anmeldetag: 26.04.2000
(51) Int. Cl.: G02B 6/44

(54) **Verbindungsmuffe**

(30) Priorität: 05.05.1999 DE 29907944 U; 16.06.1999 DE 29910514 U
(71) Anmelder: NKT Cables GmbH, 51063 Köln (DE)
(72) Erfinder: Kastl, Robert, 51427 Bergisch Gladbach (DE); Schindler, Bernhard, 53844 Troisdorf (DE); Siegert, Wolfgang, 58642 Iserlohn (DE)

(57) **Zusammenfassung**

Die Erfindung betrifft eine Muffe zur Verbindung zweier Enden von Lichtwellenleiter-Freileiterseilen (LFS), welche umfaßt:
- ein Muffengehäuse (24), welches in seinem Innern einen Spleißraum (22) umschließt und mindestens Haltemittel für mindestens eine LWL-Kassette (38) umfaßt,
- eine stromleitende Verbindung (18,60,70) zwischen den beiden Enden der Lichtwellenleiter-Freileiterseile (LFS) und zugkraftaufnehmende Befestigungsmittel (20) für jedes Ende der Freileiterseile (LFS),
   wobei in dem Muffengehäuse (24) mindestens eine Durchführung (30,30',31) für mindestens eine Lichtwellenleiter-Abzweigung vorhanden ist. Weiterhin kann das Muffengehäuse (24) senkrecht zur Verbindungsrichtung der Freileiterseile (LFS) in mindestens zwei Gehäuseteilkörper (24.1, 24.2) geteilt und die Durchführung (30,30',31) in einem der Gehäuseteilkörper (24.1, 24.2) ausgebildet sein.

## Beschreibung

Die Erfindung betrifft eine Muffe zur Verbindung zweier Enden von Lichtwellenleiter-Freileiterseilen nach dem Oberbegriff des 1. Anspruchs.

Es sind Verbindungsmuffen bekannt, die im freien Spannfeld von Lichtwellenleiter-Freileiterseilen oder im Bereich eines Abspannmasten eingesetzt werden können. Im Bereich eines Abspannmasten besteht dann in der Regel die Möglichkeit, eine Verbindungsmuffe über eine Isoliereinrichtung aufzuständern oder aufzuhängen und die Lichtwellenleiter in der Isoliereinrichtung auf Erdpotential herauszuführen. Dabei wird erreicht, daß die Muffe die Zugkraft der Seilenden nicht aufzunehmen hat.

Bisher sind keine Verbindungsmuffen der genannten Gattung bekannt, die nicht als Isoliereinrichtung aufgebaut sind, und zum Herausleiten mindestens eines Lichtwellenleiters aus der Muffe geeignet sind.

Es ist Aufgabe der Erfindung, eine Verbindungsmuffe vorzuschlagen, die sowohl für die zugkraftübertragende Seilverbindung geeignet ist, als auch zur Herausleitung mindestens eines LWL ausgebildet ist.

Die Lösung wird in den Merkmalen des Hauptanspruchs wiedergegeben. Weitergehende Ausgestaltungen sind in den Unteransprüchen zu finden.

Die Verbindungsmuffe kann mit verschiedenen Merkmalen und/oder in verschiedenen Ausführungsformen gestaltet sein.

Das Muffengehäuse ist senkrecht zur Verbindungsrichtung der Freileiterseile in mindestens zwei Gehäuseteilkörper geteilt und mindestens eine Durchführung ist (nur) in einem der Gehäuseteilkörper ausgebildet.

Das Muffengehäuse ist aus zwei - vorzugsweise nahezu identischen - Gehäuseteilkörpern ausgebildet und mindestens eine Durchführung ist nur in einem der Gehäuseteilkörper vorhanden.

Mindestens eine Durchführung ist in einem Gehäuseteilkörper zwischen zwei endständigen Gehäuseteilkörpern ausgebildet.

Die Durchführung kann entweder im wesentlichen senkrecht oder im wesentlichen parallel zur Verbindungsrichtung der Lichtwellenleiter-Freileiterseile ausgebildet sein. Die Lichtwellenleiter sind üblicherweise in einem LWL-Röhrchen eingezogen. Als äußerst robuste LWL-Röhrchen haben sich Röhrchen aus Edelstahl herausgestellt. Das Herausführen des LWL-Röhrchens wird mit bekannten Maßnahmen durchgeführt, wobei zumindest auf Feuchtigkeitsdichtigkeit und Zugentlastung für das LWL-Röhrchen Sorge getragen wird. Die LWL werden dann zu von der Verbindungsmuffe unabhängigen Isolatoren geführt und gelangen darüber auf Erdpotential.

Die Durchführungen können weiterhin so ausgebildet sein, daß sie bei Nichtgebrauch mit Verschlußmitteln (Deckeln oder Schrauben) verschließbar sind, ebenfalls mit der Mindestanforderung der Feuchtedichtigkeit.

Das Muffengehäuse kann in mehreren Gehäuseteilkörpern längs oder quer zur Verbindungsrichtung der Lichtwellenleiter-Freileiterseile geteilt sein. Das Muffengehäuse kann auch im wesentlichen rotationssymmetrisch ausgebildet sein.

Die Freileiterseil-Enden sind mit Befestigungsmittel - wie Preßverbinder, Seilklemmen oder Seilverschraubungen - zugfest im Muffengehäuse eingeführt.

Das Muffengehäuse ist derart ausgebildet (beispielsweise als metallisches Vollgehäuse), daß es die elektrische Verbindung der Freileiterseile übernehmen kann. Dazu ist vorgesehen, daß die Freileiterseile am Muffengehäuse elektrisch leitend über Stromanschlußbolzen befestigt sind. Die Einführung der Freileiterseile über Stromanschlußbolzen in das Muffengehäuse muß daher so gestaltet, sein, daß keine isolierenden Schichten (beispielsweise auch keine Silikon-Fettung) dazwischenliegen.

Außerhalb des Muffengehäuses kann eine Stromschiene zur elektrischen Überbrückung des Muffengehäuses vorhanden sein. Eine solche Ausführungsform ist angezeigt, wenn das Muffengehäuse aus Kunststoff ausgebildet ist, oder die elektrische Leitfähigkeit des Muffengehäuses nicht für den (vollen) Stromtransport ausreicht.

An der Verbindungsmuffe können Befestigungsmittel zum Aufhängen des Muffengehäuses beispielsweise im Abspannmast vorhanden sein.

Mehrere Ausführungsbeispiele der Erfindung werden in den Figuren dargestellt. Sie zeigen im Einzelnen:
Fig. 1 ein Muffengehäuse mit Stromschiene,
Fig. 2 ein Muffengehäuse mit aufgebrochenem Spleißraum,
Fig. 3 einen Schnitt durch das Muffengehäuse,
Fig. 4 ein Muffengehäuse mit LWL-Durchführung in Richtung der LFS,
Fig. 5 ein Muffengehäuse mit außenliegender Flanschverbindung und
Fig. 6 die Anbindung von Stromschienenhalbteilen an den Gehäuseflansch.

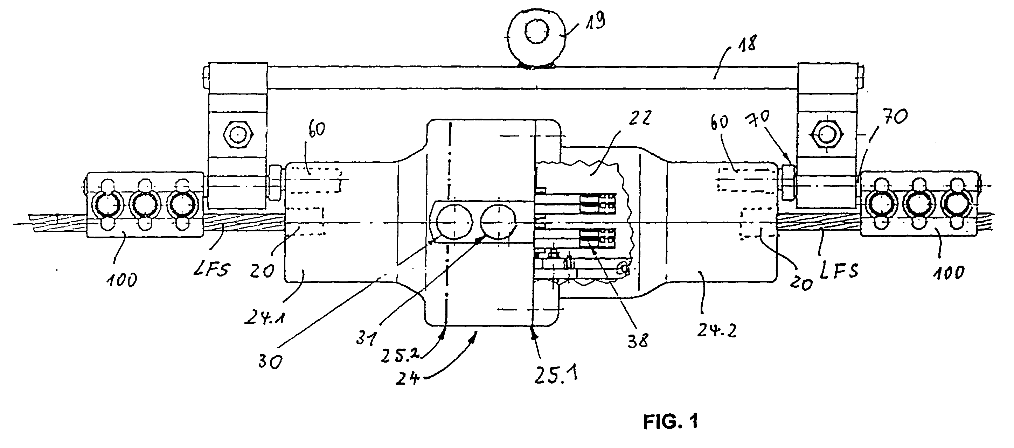

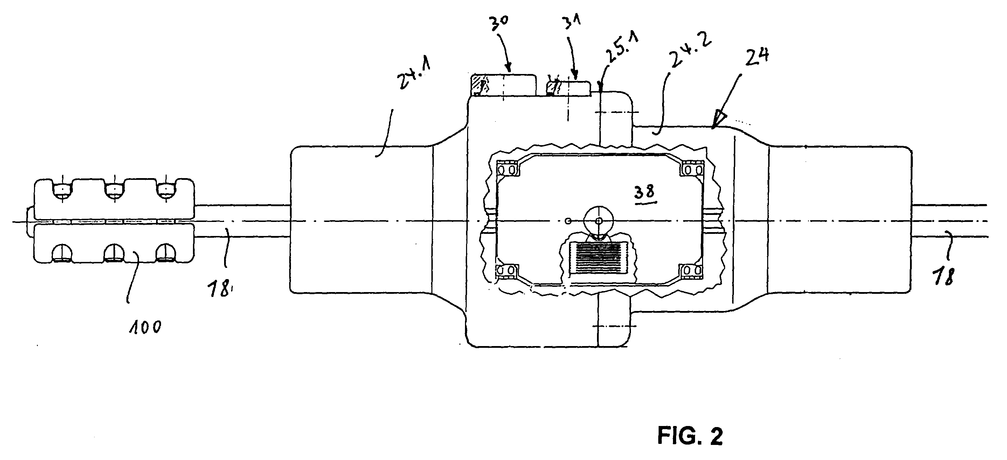

Fig. 1 zeigt eine Muffe zur Verbindung zweier Enden von Lichtwellenleiter-Freileiterseilen LFS. Fig. 2 zeigt eine Sicht auf das Muffengehäuse in einer Lage 90° zur Ansicht in Fig. 1. Die Muffe umfaßt ein Muffengehäuse 24, welches in seinem Innern einen Spleißraum 22 und im Spleißraum mindestens Haltemittel (34,35,36) für mindestens eine LWL-Kassette 38 enthält. Das Muffengehäuse umschließt vollständig den Spleißraum 22, der mindestens eine (in Fig. 1 zwei) LWL-Kassette 38 enthält. Das Muffengehäuse 24 ist aus zwei senkrecht zur Verbindungsrichtung der Freileiterseile geteilten Gehäuseteilkörpern 24.1,24.2 gebildet, die an der Fuge 25 zusammenstoßen und dort einen Flansch bilden. Durch die strichpunktierte Linie 25.2 ist angedeutet, daß das Muffengehäuse auch in mehr als zwei Teile geteilt sein kann. Bei einer Dreiteilung könnten die beiden endständigen Gehäuseteile identisch und ein zentrales Mittelteil für die Ausbildung des Spleißraums ausgebildet sein. Das Mittelteil könnte in einer solchen Ausführungsform eine oder mehrere Durchführungen für die LWL umfassen; die endständigen Gehäuseteile hätten keine Durchführung.

Zwischen den beiden Enden der Lichtwellenleiter-Freileiterseile LFS besteht eine stromleitende Verbindung. Diese kann über die elektrisch leitenden Anschlüssen 20 der Freileiterseile über das Metallgehäuse der Muffe verlaufen, oder unter Umgehung des Strompfads über das Muffengehäuse von den Seilklemmen 100 und den Stromanschlußbolzen 70 über die Stromschiene, die beiderseits des Muffengehäuses die Stromanschlußbolzen 70 verbindet. An der Stromschiene 18 kann eine Aufhängeöse 19 angebracht sein, die die Zugkraft der hängenden Muffe aufnimmt. Über die Anschlüsse 20 gelangen die LWL aus dem Innern der Freileiterseile in das Muffengehäuse zu den Spleißkassetten 38.

Für das Herausführung von Lichtwellenleitern aus einem der Gehäuseteilkörper 24.1,24.2 sind zwei Durchführungen 30, 31 vorhanden, die feuchtigkeitsdicht verschließbar sind.

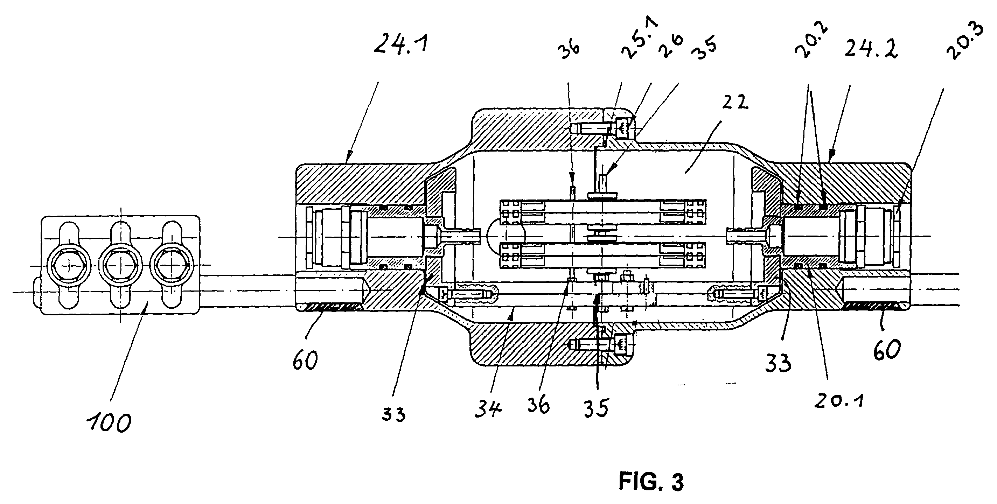

Fig. 3 zeigt ein Muffengehäuse im Schnitt. Ein elektrisch leitender Anschluß an das Metallgehäuse 24.1,24.2 der Muffe wird über die Strombolzeneinführung 60 hergestellt. An dieser Stelle (Löt- oder Schweißstelle 60) ist besonders vorgesehen, daß ein guter elektrischer Übergang vorhanden ist. Die Freileiterseil-Einführung 20 besteht aus einer Hülse 20.1, in der über Verschraubungen 20.3 das Seit geklemmt ist. Bezugszeichen 20.2 stellt Runddichtringe dar, die mit Silikon eingerieben sind. Der Spleißraum wird (rechts und links) durch zwei Stirnplatten 33 gebildet, die mit einer Flanschverbindung 34 untereinander verschraubt sind. Die Flanschverbindung 34 stellt außerdem den Träger für die LWL-Kassetten 38 dar. Mehrere Kassetten werden übereinander durch Bolzen 35 und 36 miteinander gehalten und abgestützt. Ansonsten ist der Aufbau des Spleißraums vergleichbar mit dem in der DE 91 15 949.0 U1.

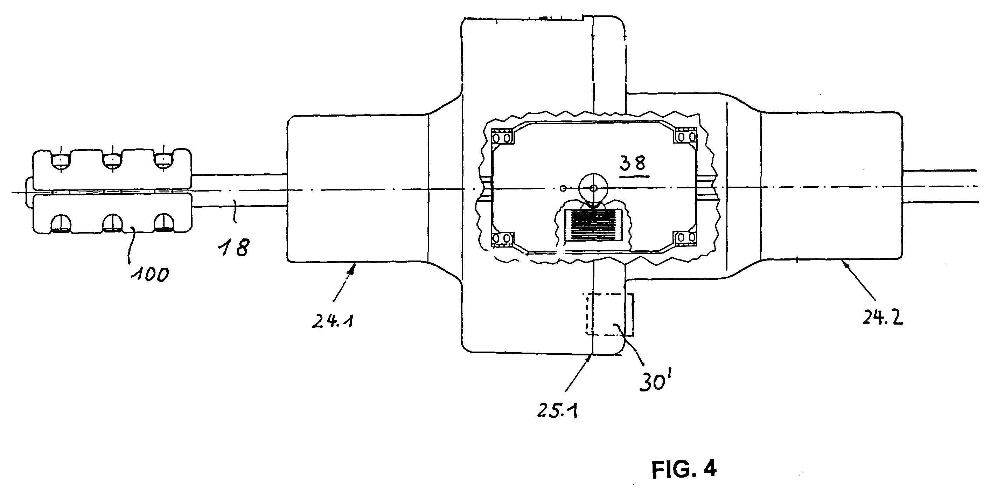

Fig. 4 zeigt (in Ansicht wie in Fig. 2) ein Muffengehäuse, bei dem die LWL-Durchführung 30' parallel zur Verbindungsrichtung der Freileiterseile angebracht ist. Hierfür ist das Muffengehäuse gegenüber den vorgenannten Ausführungsformen im Durchmesser größer ausgebildet.

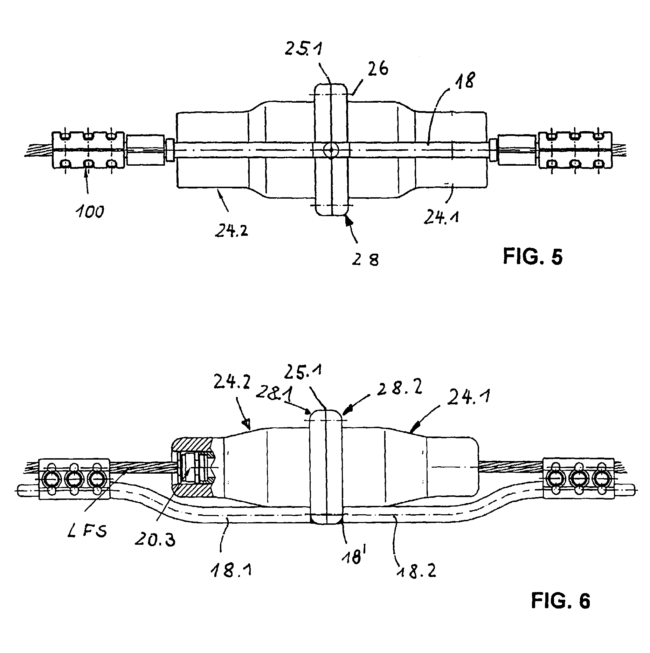

Fig. 5 zeigt ein zweigeteiltes Muffengehäuse (24.1,24.2), bei dem der Innenraum relativ klein ausgebildet ist. Der Verbindungsflansch 28 der beiden Gehäuseteile ragt über den Durchmesser des Muffengehäuses nach außen über. Wie im Vergleich zu Fig. 3 feststellbar, ist der Verbindungsflansch 28 nur so schmal ausgebildet, wie es für die Unterbringung der Schrauben 26 der Flanschverbindung notwendig ist. Ansonsten ist der Aufbau entsprechend der Darstellung in Fig. 3.

In Fig. 6 findet sich eine Ausführungsform, bei der die Stromschiene 18 zweigeteilt (18.1 und 18.2) ist. Die inneren Ende der beiden Teile der Stromschiene sind körperlich mit den beiden Flanschhälften 28.1 und 28.2 verbunden (beispielsweise durch Verschweißen). Das Muffengehäuse erhält durch diese Verbindung eine stärkere Stabilität.

### Bezugszeichenliste

- LFS: Freileiterseil mit LWL
- 18: Stromschiene
- 18': Verbindung Stromschiene 18 zu Gehäuseflansch 28
- 19: Aufhängeöse an Stromschiene 18
- 20: Seilbefestigung
- 20.1: Hülse
- 20.2: Runddichtung(en)
- 20.3: Verschraubung
- 22: Spleißraum
- 24: Muffengehäuse
- 24.1: Gehäuseteil 1
- 24.2: Gehäuseteil 2
- 25.1: erste Gehäusefuge
- 25.2: zweite Gehäusefuge
- 26: Verschraubung der Gehäuseteile
- 28,28.1,28.2: Gehäuseflansch
- 30, 30', 31: Durchführungen
- 32: Verschlußmittel (Deckel, Verschraubung)
- 33: zwei Stirnplatten
- 34: Verbindung zwischen Stirnplatten
- 38: LWL-Kassette
- 35: Verbindungs- oder Tragbolzen für LWL-Kassette(n)
- 36: Verbindungs- oder Tragbolzen für LWL-Kassette(n)
- 60: elektr. leitender Anschluß für Stromanschlußbolzen 70
- 70: Stromanschlußbolzen
- 100: Seilklemme

## Patentansprüche

1. Muffe zur Verbindung zweier Enden von Lichtwellenleiter-Freileiterseilen (LFS), welche umfaßt:
• ein Muffengehäuse (24), welches in seinem Innern einen Spleißraum (22) umschließt und mindestens Haltemittel für mindestens eine LWL-Kassette (38) umfaßt,
• eine stromleitende Verbindung (18,60,70) zwischen den beiden Enden der Lichtwellenleiter-Freileiterseile (LFS) und
• zugkraftaufnehmende Befestigungsmittel (20) für jedes Ende der Freileiterseile (LFS), **dadurch gekennzeichnet**, daß in dem Muffengehäuse (24) mindestens eine Durchführung (30,30',31) für mindestens eine Lichtwellenleiter-Abzweigung vorhanden ist.

2. Verbindungsmuffe nach Anspruch 1, **dadurch gekennzeichnet**, daß das Muffengehäuse (24) senkrecht zur Verbindungsrichtung der Freileiterseile (LFS) in mindestens zwei Gehäuseteilkörper (24.1, 24.2) geteilt ist und mindestens eine Durchführung (30,30',31) in einem der Gehäuseteilkörper (24.1, 24.2) ausgebildet ist.

3. Verbindungsmuffe nach Anspruch 1, **dadurch gekennzeichnet**, daß das Muffengehäuse (24) aus zwei Gehäuseteilkörpern (24.1, 24.2) gebildet ist und mindestens eine Durchführung (30,30',31) in einem der Gehäuseteilkörper (24.1, 24.2) ausgebildet ist.

4. Verbindungsmuffe nach einem der vorhergehenden Ansprüche, **dadurch gekennzeichnet**, daß mindestens eine Durchführung (30,30',31) in einem Gehäuseteilkörper (24.1, 24.2) angeordnet ist, der zwischen zwei endständigen Gehäuseteilkörpern (24.1, 24.2) ausgebildet ist.

5. Verbindungsmuffe nach einem der vorhergehenden Ansprüche, **dadurch gekennzeichnet**, daß mindestens eine Durchführung (30,31) im wesentlichen senkrecht zur Verbindungsrichtung der Lichtwellenleiter-Freileiterseile (LFS) ausgebildet ist.

6. Verbindungsmuffe nach einem der Ansprüche 1 bis 4, **dadurch gekennzeichnet**, daß mindestens eine Durchführung (30') im wesentlichen parallel zur Verbindungsrichtung der Lichtwellenleiter-Freileiterseile (LFS) ausgebildet ist.

7. Verbindungsmuffe nach einem der vorhergehenden Ansprüche, **dadurch gekennzeichnet**, daß mindestens eine Durchführung (30,30',31) so ausgebildet ist, daß sie bei Nichtgebrauch mit Verschlußmitteln (30') verschließbar ist.

8. Verbindungsmuffe nach einem der Ansprüche 1, 5, 6 oder 7, **dadurch gekennzeichnet**, daß die Gehäuseteilkörper (24.1, 24.2) längs oder quer zur Verbindungsrichtung der Lichtwellenleiter-Freileiterseile (LFS) geteilt sind.

9. Verbindungsmuffe nach einem der vorhergehenden Ansprüche, **dadurch gekennzeichnet**, daß das Muffengehäuse (24) im wesentlichen rotationssymmetrisch ausgebildet ist

10. Verbindungsmuffe nach einem der vorhergehenden Ansprüche, **dadurch gekennzeichnet**, daß die Befestigungsmittel für ein Freileiterseil-Ende im Muffengehäuse als Preßverbinder, als Seilklemme oder als Seilverschraubung (20) ausgebildet sind.

11. Verbindungsmuffe nach einem der vorhergehenden Ansprüche, **dadurch gekennzeichnet**, daß das Muffengehäuse (24) derart ausgebildet ist, daß es die elektrische Leitung zwischen den Freileiterseilen (LPS) übernehmen kann.

12. Verbindungsmuffe nach Anspruch 11, **dadurch gekennzeichnet**, daß die Freileiterseile (LPS) am Muffengehäuse (24) elektrisch leitend über Stromanschlußbolzen (60,70) befestigt sind.

13. Verbindungsmuffe nach einem der Ansprüche 1 bis 11, **dadurch gekennzeichnet**, daß außerhalb des Muffengehäuses (24) eine Stromschiene (18) zur elektrischen Überbrückung des Muffengehäuses (24) vorhanden ist.

14. Verbindungsmuffe nach einem der vorhergehenden Ansprüche, **dadurch gekennzeichnet**, daß die Verbindungsmuffe Befestigungsmittel (18,19) zum Aufhängen des Muffengehäuses (24) umfaßt.
